# EUROPEAN PATENT APPLICATION

(11) **EP 4 810 229 A1**
(43) Date of publication of application: **23.09.2026**
(21) Application number: 26163197.2
(22) Date of filing: 09.03.2026
(51) Int. Cl.: B29C 63/00, B29C 63/04, B65B 11/06

(54) **FILM-APPLYING MACHINE**

(30) Priority: 17.03.2025 IT 202500005430
(71) Applicant: Meta Srl, 31015 Conegliano (TV) (IT)
(72) Inventor: Minatel, Gian Paolo, 31015 Conegliano (TV) (IT); Minatel, Leonardo, 31015 Conegliano (TV) (IT)
(74) Representative: Citron, Massimiliano

(57) **Abstract**

A film-applying machine is described for laying a plastic film on an object. The machine comprises a guide for guiding a foil, to be coated with the protective film, along an advance path that extends along a first axis; pressing means mounted movable relative to the guide for pushing the protective film against the foil to make them adhere; and an organ that is adapted to receive and retain a hem of protective film and movable relative to the pressing means to move along the first axis between the pressing means and the guide to bring the hem fixed thereon from one side of the pressing means to the opposite side and thus create a section of protective film parallel to the foil.

## Description

The present invention relates to a film-applying machine and a method for applying a film on a foil, for example a sheet of metal.

Film-applying machines, also called filming machines, are known for applying a protective or decorative film to a surface, usually in an industrial setting, for various purposes such as protection from atmospheric agents, aesthetic optimization or protection against wear in subsequent processing stages of the same.

An object that is commonly protected in this way is sheet metal.

In many cases, the sheet metal arrives in foils requiring a film to be applied, so for each different sheet size the plastic film must be manually unrolled from a reel of the appropriate width and inserted into the machine. Operators find this difficult because they are stationed atop a platform, and unrolling the protective film is tiring and cumbersome.

Especially at low ambient temperatures, the adhesive on the protective film resists the movement, and the wider the reel, the more difficult it becomes to unroll. This often requires two people, and just as often, the protective film curls and sticks to each new edge pulled from the reel. In short, equipping the film-applying machine with the protective film for each sheet to be applied is a costly, time-consuming task that results in many meters of wasted protective film. The same problem also occurs with a film-applying machine that coats a sheet of metal that is unwound from one reel and wound onto another reel.

The main object of the invention is to eliminate or mitigate the above mentioned drawbacks by providing an improved film-applying machine of the above mentioned type and a film-applying method.

A film-applying machine for applying a protective film, especially an adhesive one, onto a foil comprises:
- a guide for guiding a foil, to be coated with the protective film, along a path of advancement that extends along a first axis;
- pressing means mounted movable relative to the guide for pushing the protective film against the foil to make them adhere (and for pushing the foil against the guiding means);
- an organ that is

adapted to receive and retain a hem of protective film and
movable relative to the pressing means to move along the first axis between the pressing means and the guide to bring the hem fixed on it from one side of the pressing means to the opposite side and thus create a section of protective film parallel to the foil.

Thanks to said organ the protective film can be laid well and without wrinkles on the foil, automatically, quickly and without much manual effort.

In one embodiment, said organ is movable relative to the pressing means along the first axis
in the opposite direction to the advancement of the foil, to facilitate the unwinding of the film, and/or
inside a tunnel formed between the pressing means and the guide.

In a simple embodiment, said organ is an elongated element, preferably a rectilinear element oblong along a second axis, e.g. a bar.

In one embodiment, said organ is rotatable about an axis of rotation thereof, which in particular is substantially horizontal, to wind up a hem of protective film. In one embodiment, the axis of rotation of said organ coincides with the second axis.

In one embodiment, the film-applying machine comprises blocking means for blocking the rotation of said organ, in order to facilitate the transport of the film.

In one embodiment, said organ is mounted on the film-applying machine in movable manner around the pressing means to move around them with orbital motion, preferably of 360 degrees, with the advantage of not hindering the laying of the film.

In one embodiment, said organ is mounted on the film-applying machine so as to rotate
- about a third axis that is contained in a plane orthogonal to the first axis, and/ or
- so as to be able to complete a complete rotation around the pressing means (with the advantage of avoiding the retrograde movement of said organ which would slow down the processing).

In one embodiment the film-applying machine comprises a pair of flexible members, e.g.
chains or cables, arranged to form two rings that are
- equal to each other,
- contained in respective vertical planes which are offset, parallel to each other and parallel to the first axis, and
- arranged symmetrically on opposite sides of the guide,

said organ being coupled, preferably at its ends, to respective points of the rings,
the rings being adapted to pull said organ around the pressing means, preferably always keeping it parallel to itself.

In one embodiment, each ring is mounted on wheels, e.g. gears and/or pulleys, so that it remains taut around the wheels, with the wheels being rotationally operable to slide each ring on its respective wheels. In one embodiment, said wheels are arranged as the vertices of a polygon, e.g. a rectangle.

In one embodiment, the film-applying machine comprises cutting means for cutting the protective film at the pressing means.

In one embodiment, the cutting means comprise a cutting edge translatable orthogonally to the first axis along a hem of film to cut it and separate it from the reel.

In one embodiment the cutting means comprises a rotatable member which is mounted in proximity to the pressing means to divert the direction of the protective film dragged by said organ towards the pressing means, the rotatable member comprising a cutting member and being configured to rotate and bring the cutting member into contact with the protective film in order to cut it.

In one embodiment the cutting member is provided on the outer surface of the rotatable member, and preferably occupies only a rectilinear area of such outer surface, the remainder of such outer surface being smooth.

In one embodiment the rotatable member is placed inside one or each ring.

In one embodiment, the rotatable member is arranged so that, when said organ has passed the pressing means and reached the exit of the tunnel, the hem of film pulled by said organ rests on the rotatable member and is deflected by it.

In one embodiment, the rotatable member has an axis of rotation parallel to the second axis and/or third axis, in particular it has a horizontal axis of rotation.

In one embodiment the rotatable member is mounted to rotate in synchronism with the orbital displacement of said organ around the pressing means.
in one embodiment the rotatable member is coupled to one of said rings to be rotated by that ring.

In one embodiment one of said flexible elements is coupled to a drive, e.g. a gear wheel or pulley, adapted to slide the ring of flexible member,
the rotatable member being connected to the drive to be rotated in synchronism with such ring.

In one embodiment, the translation of the organ and the rotation of the rotatable member occur in synchronism. For this purpose, the machine preferably comprises a mechanism for actuating the translation of the organ and the rotation of the rotatable member in synchronism such that the cutting edge of the rotatable member faces
the hem of film dragged by the organ and/or
outwards from the ring
only when the organ has passed the rotatable member on the return path around the pressing means towards the starting angular position of the organ.

In one embodiment, the machine comprises means for rotating the rotatable member by kinematically converting a movement of the organ of or a drive of the organ.

Another aspect of the invention relates to a method for placing a hem of protective film on a foil which slides on a guide of a film-applying machine adapted for laying a protective film, in particular adhesive, on a foil, wherein
the foil to be covered with the protective film slides on the guide along a first axis and
the protective film is pushed towards the guide to obtain adhesion between the protective film and the foil,
wherein prior to said adhesion
a hem of protective film is dragged along the first axis to bring the hem from one side of the pressing means to the opposite side and thus create a section of protective film parallel to the foil to be adhered.

In one embodiment, the hem of protective film is dragged along the first axis inside a tunnel formed between the pressing means and the guide.

In one embodiment, the hem of protective film is dragged along the first axis in the opposite direction to the advancement of the foil.

In one embodiment, the protective film is dragged around a second axis that passes through the pressing means and which in particular is substantially horizontal.

In one embodiment, the hem is attached around a movable organ, and then said organ is moved thereby dragging the hem along the first axis.

In one embodiment, the hem is wrapped around a organ that is rotatable and movable, the rotation of said organ is blocked, and then said organ is moved, thus dragging the hem along the first axis.

In one embodiment, the plastic film is dragged around the pressing means in an orbital motion, specifically of 360 degrees.

In one embodiment, the plastic film is dragged around the pressing means by rotating the hem around a third axis that is contained in a plane orthogonal to the first axis.

In one embodiment, the protective film is cut at the pressing means by a cutting member that move relative to the protective film while the protective film is stationary.

In one embodiment, the protective film is cut at the pressing means by a cutting member that moves relative to the protective film while the protective film is moving around the pressing means, and preferably
the movement of the cutting member is synchronized with that of the hem and/or with the sliding of a ring.

In one embodiment, the movement of the cutting member is derived and/or obtained from the movement of
said organ moving around the pressing means, and/or
of a ring, and/or
of a drive that sets the ring in motion.

In one embodiment, the movement of the cutting member is synchronized with the movement of said organ movable around the pressing means.

In one embodiment the cutting member rotates about an axis parallel to the second axis.

In one embodiment the third axis and/or the second axis is /are horizontal.

In one embodiment the third axis and the second axis are parallel.

In one embodiment the cutting member is a blade or a comb of needles.

Each of the variants defined above can be implemented alone or in combination with one or each of the others.

The advantages of the invention will be further clarified by preferred embodiments described below with reference to the accompanying drawings, wherein:
- Figure 1 shows a three-dimensional view of a film-applying machine;

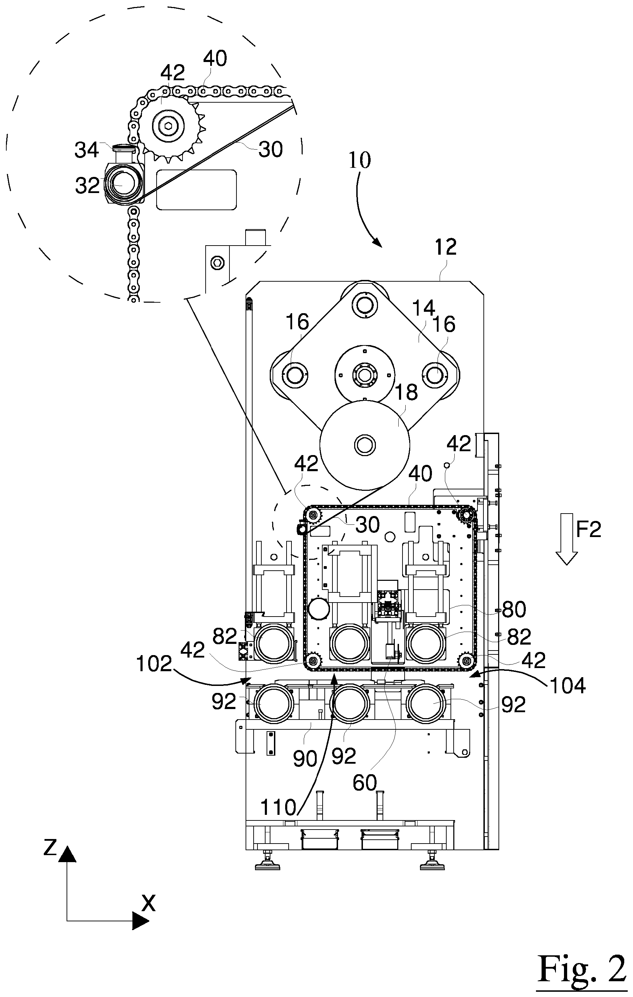

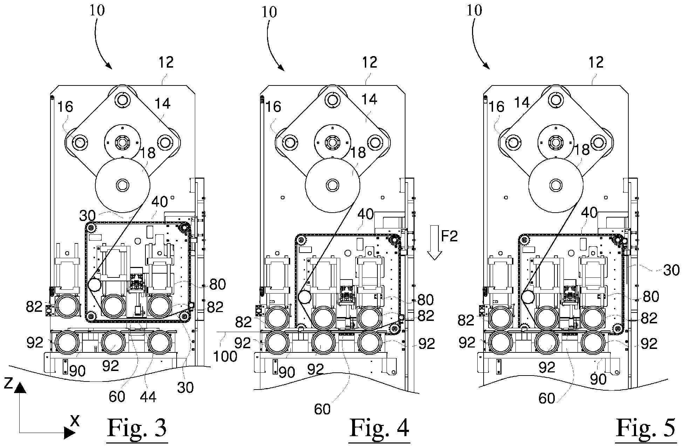

- Figures 2-5 show a front view of an operating sequence of the film-applying machine in Fig. 1;

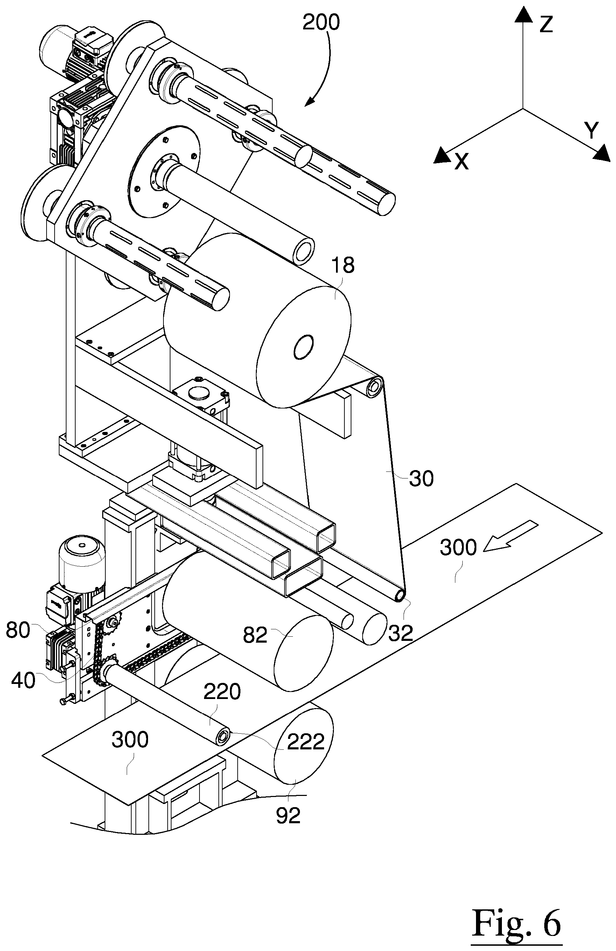

- Figure 6 shows a second film-applying machine in a three-dimensional view;

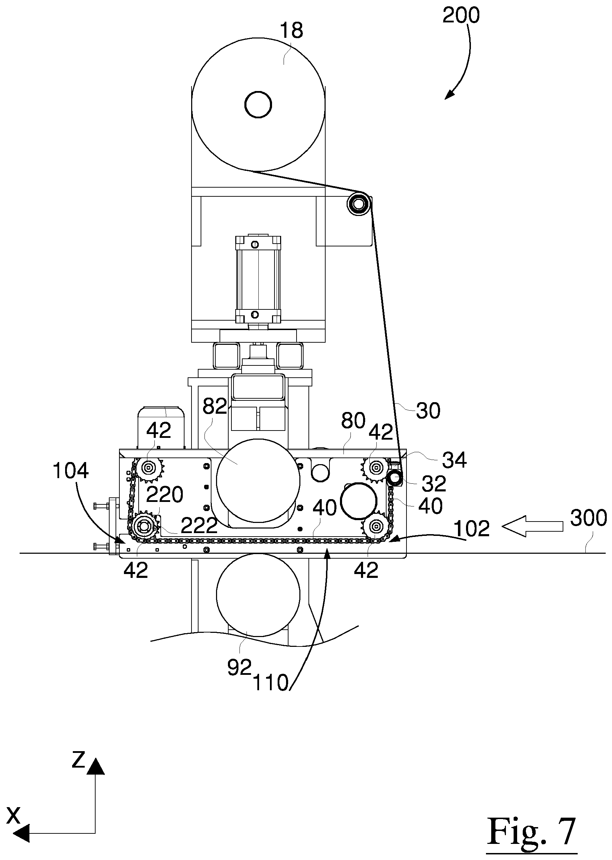

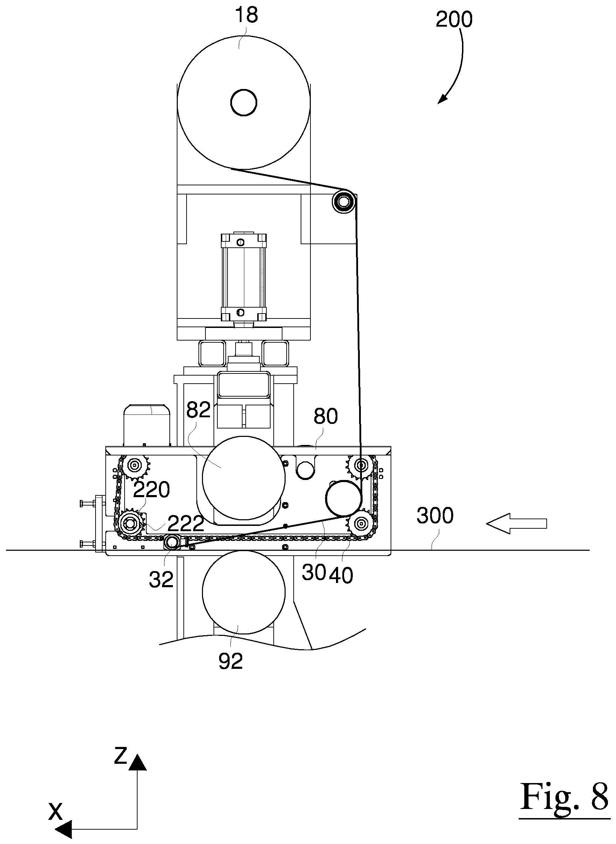

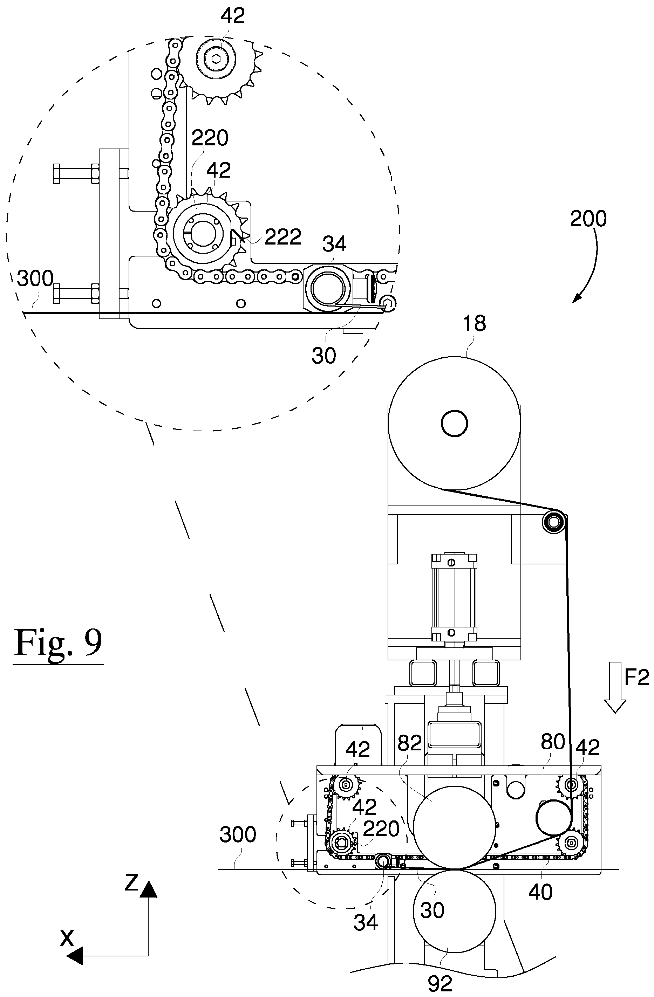

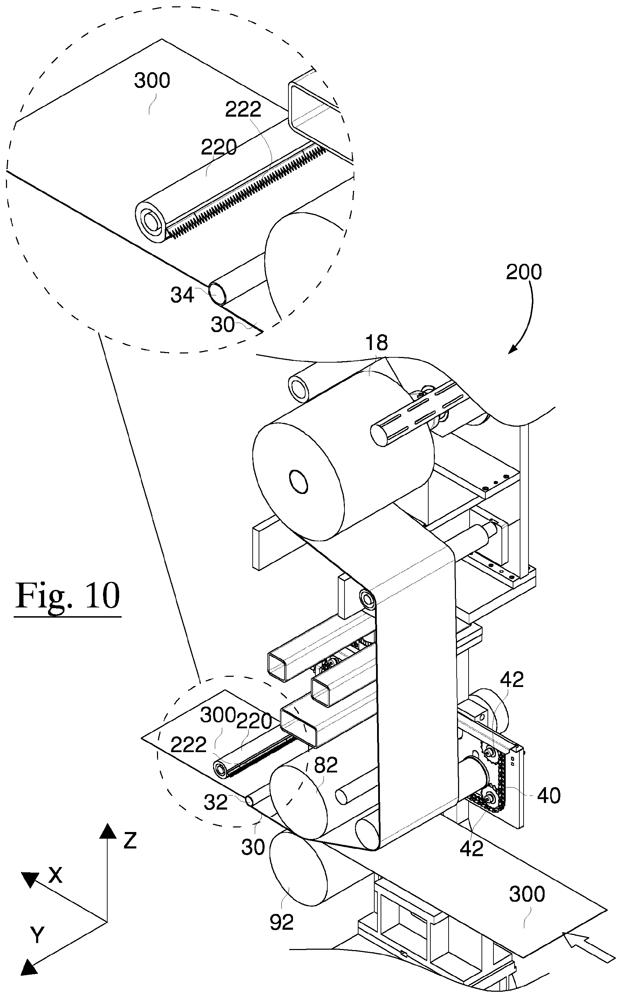

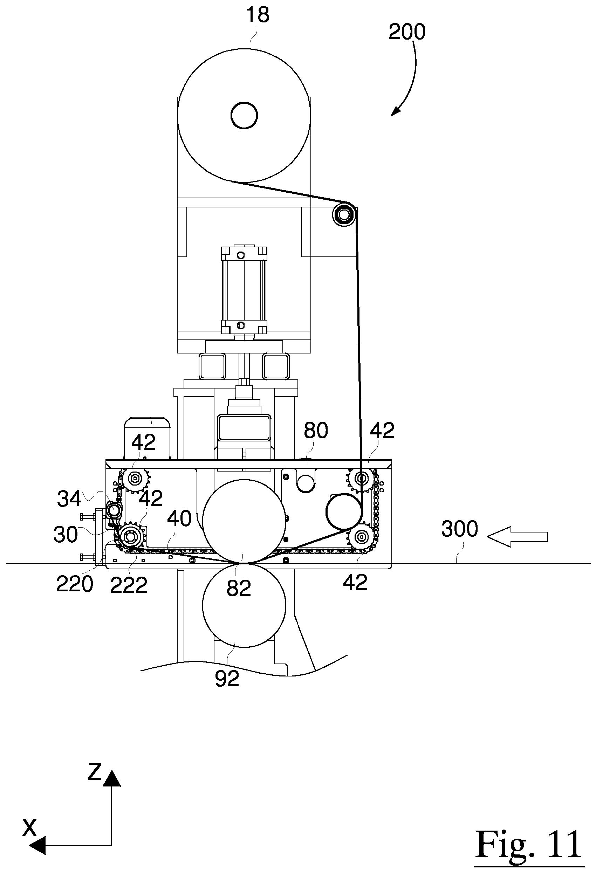

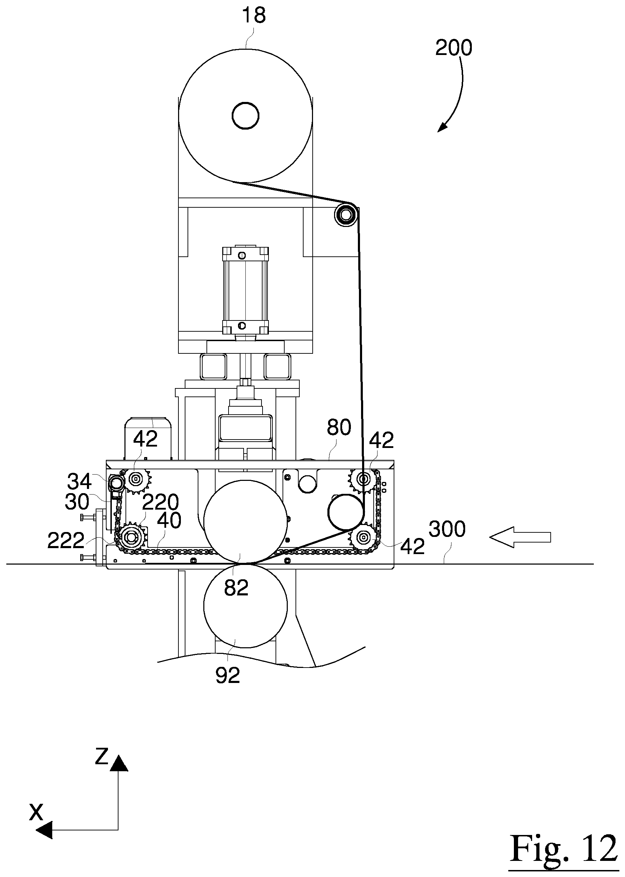

- Figures 7-12 show a front view of an operating sequence of the film-applying machine in Fig. 6.

Equal numbers in the figures indicate equal or substantially equal parts. To avoid cluttering the drawings, identical elements are sometimes left unnumbered.

Let's define a set of directions or Cartesian axes XYZ, where X and Y are horizontal directions orthogonal to each other and Z is the vertical direction orthogonal to the XY plane.

A film-applying machine 10 operates to lay a protective film on a foil 100, e.g. a metal sheet, which passes through it along the horizontal advancement axis X.

The machine 10 comprises a frame 12 that can be equipped with a reel 18 of protective film. In one embodiment, the frame 12 features a support 14 rotatable about a horizontal axis mounting mandrels 16, e.g. expandable, on which the reel 18 is insertable and lockable. The reel 18 unwinds by rotating preferably about an axis parallel to Y.

The foil 100 slides through the machine 10 along the X-axis supported by a guide 90 which is preferably fixed and equipped with equal rollers 92 with horizontally aligned rotation axes.

On the frame 12, above the guide 90, pressing means are mounted to push the protective film against the foil 100 to ensure adhesion. For this purpose, the pressing means are movable with respect to the frame 12 along Z towards the guide 90 (see arrow F2) to push the foil 100 against the guide 90. In particular, the pressing means comprise a support 80 which mounts rollers 82 that are identical to each other and with a horizontally aligned rotation axes. To achieve adhesion of the protective film to the foil 100, the machine 10 has known drives to translate the support 80.

Between the pressing means and the guide 90 a sort of tunnel 110 can be formed for the foil 100 with an inlet 102 and an outlet 104. The foil 100 enters the machine 10 at the inlet 102 and exits from the outlet 104 with the protective film applied on the surface facing upwards (i.e. towards the pressing means).

The support 80 preferably also mounts a cutting means 60, e.g. in the form of a circular blade, preferably fixed, translatable along an axis parallel to the Y direction.

Around the pressing means on toothed wheels 42 are mounted two chains 40 forming a respective ring around the pressing means. The figures show only one ring, for simplicity. The two rings are identical and symmetrically arranged on the sides of the guide 90. An embodiment with a single ring is also possible.

A portion 44 of the ring, preferably horizontal, extends parallel to the X-axis between two opposite sides of the pressing means, between the inlet 102 and the outlet 104 in the tunnel 110, at a certain distance from the guide 90.

A straight bar 32 has its ends mounted on a link of a chain 40 so that the sliding of the chain 40 drags the bar 32, keeping it always horizontal and so that, when the chains 40 slide on the toothed wheels 42, the bar 32 always remains parallel to itself. For this purpose, the machine 10 has known drives to rotate the toothed wheels 42 and cause the chain 40 to circulate.

The aforementioned kinematics is such that the bar 32 can move together with the chain 40 and go around the pressing means over 360 degrees, i.e. making a complete turn around the pressing means to return to the starting point (and around an axis parallel to the Y direction).

In the illustrated embodiment, one or each link of the chain 40 has a rectangular or square shape, and may also be trapezoidal, circular or other shape.

Preferably, the bar 32 is also rotatable about an axis parallel to the Y direction, so as to roll up the hem 30.

Preferably, the rotation of the bar 32 can be locked by a locking mechanism 34.

Preferably, the machine 10 near the reel 18 comprises a platform 70 to support an operator whose task is to prepare the protective film for laying.

### OPERATION

### Phase 1:

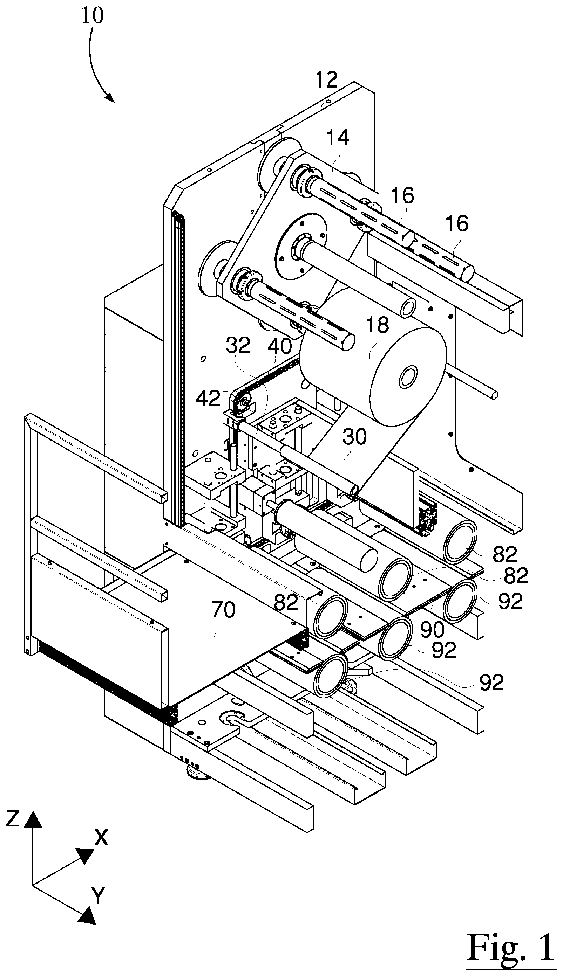

After the reel 18 has been loaded onto the support 14 (Fig. 1), each wrapping cycle begins with the bar 32 in the upper position and close to the platform 70, substantially above the pressing means. An end hem 30 of the protective film is manually pulled from the reel 18 and wound around the bar 32. The operation is facilitated by the rotation of the bar 32 about the Y axis.

After the hem 30 has been attached to the bar 32, the bar 32 is locked by the mechanism 34.

If the protective film winds up on the bar 32 also helped by the effect of the adhesive on the protective film, with the advantage that no pliers or fixings are needed on the bar 32.

When the bar 32 is locked it can no longer rotate and consequently will drag the protective film with it as it moves.

In this phase the pressing means, and the support 80, are raised with respect to the guide 90, therefore the tunnel 110 has maximum height.

### Phase 2:

The bar 32 is moved by the chain 40, which rotates counterclockwise in the drawings. The bar 32 descends until it reaches a lower position that is level with the inlet 102, enters the inlet 102, and then advances along the X-axis into the tunnel 110 beneath the rollers 82 to arrive beyond the outlet 104 and away from the last roller 82 (the one closest to the outlet 104 and furthest to the right in the drawing).

At the end of the movement, the bar 32 has travelled approximately half of the ring of chain 40 and has been brought to a position approximately diametrically opposite to the starting position.

As a result, the hem 30 has stretched out under the rollers 82 and over the rollers 92 to form a flat strip of protective film.

### Phase 3:

A foil 100 to be coated is brought to the inlet 102, then into the tunnel 110 sliding on the rollers 92 and then further on until it reaches the cutting means 60.

The pressing means, and the support 80, are lowered (arrow F2) with respect to the guide 90, so that the tunnel 110 becomes of minimum height and the rollers 82 press against the foil 100. Now the hem 30 is pressed against the upper part of the foil 100 which is between the rollers 82, 92.

### Phase 4:

The cutting means 60 is activated to separate the end portion of the hem 30. The chain 40 is re-activated to advance the bar 32 to a higher position, e.g. with a quarter turn along the ring of chain 40, where the waste piece of hem 30 will be removed by hand from the bar 32.

Now, the foil 100 is in the working position with the protective film applied and ready to advance. The foil 100 is pushed to completely pass through the tunnel 110 and consequently the protective film begins to unwind from the reel 18 and is applied to the foil 100.

Note the advantage generated by the fact that the chain 40 can move the bar 32 to return it to the starting position without having to go back under the rollers 82. Thus, no cycle time is wasted in repositioning the bar 32. This also allows a new coil 18 to be loaded and a new hem 30 to be prepared while a foil 100 is being processed.

As more foils 100 pass through, the cutting means 60 is activated each time to separate the sheets of protective film laid over each individual foil 100.

Another advantage of the machine 10 is that the waste of protective film is limited to approximately 30-50 cm, i.e. only the hem 30. Furthermore, the machine 10 requires only one operator for the setup and format change of the plastic film.

While the machine 10 processes foil by foil, a variant of the film-applying machine 200 is used to film a foil 300 from reel to reel, that is, the foil 300 is unrolled from one reel and rewound, film-coated, onto another reel. This second variant ultimately creates an entire reel with coated foil, ready to be cut into sheets once it is already coated and perhaps already processed.

The process of working the entire roll of foil is much faster than covering individual laminas foil after foil, because there is no loading and unloading time.

So the work of the machine 200 is continuous and not foil after foil like the machine 10.

In the machine 200 there are preferably fewer rollers 82, 92; but there is still the chain 40 which forms a ring around the pressing means, as in the previous variant.

Given its continuous film-applying operation, the machine 200 can be simplified by omitting the cutting means 60.

The machine 200 illustrates an embodiment for tearing the leading hem from the coil 18 in a less expensive and cumbersome manner. For this purpose, the machine 200 comprises a rotatable member 220, e.g. a return roller, located inside the chain ring 40 and having a longitudinal axis parallel to the Y direction. Mounted on the outer surface of a rotatable member 220 is a cutting edge 222, e.g. a blade or a needle comb or a saw-shaped ridge. In one embodiment, the cutting edge 222 extends parallel to the Y direction and occupies only a fraction of the outer surface of rotatable member 220, which is otherwise smooth.

The rotatable member 220 is arranged so that, when the bar 32 has passed the pressing means reaching the outlet 104, the hem 30 rests on the rotatable member 220 and is deflected by it.

In one embodiment, the rotatable member 220 is connected to the chain 40 and/or to the drive of the chain 40 so that the sliding of the chain 40 induces a proportional rotation of the rotatable member 220. Therefore, the translation of the bar 32 and the rotation of the rotatable member 220 occur in synchronism. In particular, the synchronism is such that the cutting edge 222 points towards the hem 30, i.e. towards the outside of the ring of chain 40, only when the bar 32 has passed the rotatable member 220 on the way back to the starting position.

### OPERATION

### Phase 1:

The reel 18 is in the working position and a hem 30 is unwound from it, then wind up around the bar 32 using the same methodology described previously. After the hem 30 has been wound around the bar 32, the rotation of the bar 32 is blocked by the mechanism 34. Now the pressing means are in the position of maximum distance from the guide 90 to allow the bar 32 to pass underneath it.

### Phase 2:

The sliding of the chain ring 40 is activated. The bar 32 passes through the tunnel 110 (along X) between the pressing means and the guide 90, and stops in an intermediate position immediately after the roller 92 but before the rotatable member 220.

### Phase 3:

The pressing means lower along Z bringing the roller 92 into contact with the protective film, and pushing the protective film onto the foil 300.

### Phase 4:

The sliding of the chain ring 40 is re-activated. The bar 32 advances further and rises along Z until it passes the rotatable member 220. The protective film has now been deposited on the rotatable member 220, and the rotation of the rotatable member 220 has brought the cutting edge 222 into contact with the protective film and cuts it.

### Phase 5:

The bar 32 continues to advance upwards (along Z) where it reaches a limit stop. The hem 30, now separated from the sheet of protective film, remains suspended from the bar 32 from which it will be removed. The protective film is now applied to the foil 300 to be covered; and the foil 300 slides along X until the protective film is laid across the entire length of the reel. The laying continues until the reel to be protected is exhausted or the protective film is used up.

These solutions meet the requirements of the 5.0 transition plan as they result in significant savings in time, manpower and plastic waste.

## Claims

1. Film-applying machine for laying a protective, in particular adhesive, film on a foil, comprising:
- a guide for guiding a foil, to be coated with the protective film, along an advance path that extends along a first axis;
- pressing means mounted movable relative to the guide for pushing the protective film against the foil to make them adhere;
- an organ that is
adapted to receive and retain a hem of protective film and
movable relative to the pressing means to move along the first axis between the pressing means and the guide to bring the hem fixed thereon from one side of the pressing means to the opposite side and thus create a section of protective film parallel to the foil.

2. Machine according to claim 1, wherein said organ is movable relative to the pressing means along the first axis in a direction opposite to the advancement of the foil and inside a tunnel formed between the pressing means and the guide.

3. Machine according to any preceding claim, wherein said organ is rotatable about an axis of rotation thereof to wind up a hem of protective film around said organ.

4. Machine according to claim 3, comprising a locking means for blocking the rotation of said organ.

5. Machine according to any preceding claim, wherein said organ is mounted on the film-applying machine so that it can be displaced around the pressing means to move around them with an orbital movement of 360 degrees.

6. Machine according to any preceding claim, comprising a rotatable member which comprises a cutting means and is configured to rotate and bring the cutting means into contact with the protective film in order to cut it.

7. Machine according to claim 6, wherein the rotatable member is mounted in proximity to the pressing means to deviate the direction of the protective film dragged by said organ towards the pressing means.

8. Machine according to claim 6 or 7, wherein the rotatable member is mounted to rotate in synchronism with an orbital movement of said organ around the pressing means.

9. Machine according to claim 6 or 7 or 8, comprising a mechanism to actuate the translation of the organ and the rotation of the rotatable member with a synchronism such that the cutting means of the rotatable member faces towards the hem of film dragged by the organ only when the organ has passed the rotatable member in a return path around the pressing means towards a starting angular position of said organ.

10. Machine according to claim 6 or 7 or 8 or 9, comprising means for rotating the rotatable member by kinematically converting a movement of the organ or of an actuator of the organ.
